# EUROPÄISCHE PATENTANMELDUNG

(11) **EP 2 650 331 A1**
(43) Veröffentlichungstag der Anmeldung: **16.10.2013**
(21) Anmeldenummer: 12163731.8
(22) Anmeldetag: 11.04.2012
(51) Int. Cl.: C08L 77/00, C08L 77/06

(54) **Polyamide für Trinkwasseranwendungen**

(71) Anmelder: BASF SE, 67056 Ludwigshafen (DE)
(72) Erfinder: Mägerlein, Andreas, 67061 Ludwigshafen (DE); Demeter, Jürgen Dr., 67227 Frankenthal (DE); Scheibitz, Matthias Dr., 69469 Weinheim (DE); Ehret, Frank, 67133 Maxdorf (DE); Kniesel, Simon Dr., 69469 Weinheim (DE)

(57) **Zusammenfassung**

Verwendung von thermoplastischen Formmassen enthaltend
A) 10 bis 50 Gew.-% eines teilkristallinen Polyamides,
B) 5 bis 30Gew.-% eines amorphen Polyamides, enthaltend Einheiten abgeleitet von Hexamethylendiamin, Isophthalsäure und Terephthalsäure,
C) 30 bis 65 Gew.% eines faserförmigen Füllstoffes,
D) 0 bis 3 Gew.-% eines sterisch gehinderten Phenols,
E) 0 bis 30 Gew.-% weiterer Zusatzstoffe,

wobei die Summe der Gewichtsprozente A) bis E) 100% ergibt,
zur Herstellung von Formkörpern für Trinkwasseranwendungen.

## Beschreibung

Die Erfindung betrifft die Verwendung von thermoplastischen Formmassen, enthaltend
A) 10 bis 50 Gew.-% eines teilkristallinen Polyamides,
B) 5 bis 30 Gew.-% eines amorphen Polyamides, enthaltend Einheiten abgeleitet von Hexamethylendiamin, Isophthalsäure und Terephthalsäure,
C) 30 bis 65 Gew.% eines faserförmigen Füllstoffes,
D) 0 bis 3 Gew.-% eines sterisch gehinderten Phenols,
E) 0 bis 30 Gew.-% weiterer Zusatzstoffe,
wobei die Summe der Gewichtsprozente A) bis E) 100% ergibt,
zur Herstellung von Formkörpern für Trinkwasseranwendungen.

Weiterhin betrifft die Erfindung die hierbei erhältlichen Formkörper, welche für Trinkwasseranwendungen geeignet sind.

Thermoplastische Polyamide wie PA6 und PA66 werden häufig in Form von glasfaserverstärkten Formmassen als Konstruktionswerkstoffe für Bauteile, die während ihrer Lebensdauer erhöhten Temperaturen ausgesetzt sind, eingesetzt, wobei es zu thermooxidativen Schädigungen kommt. Durch Zusatz von bekannten Wärmestabilisatoren kann das Auftreten der thermooxidativen Schädigung zwar hinausgezögert nicht aber dauerhaft verhindert werden, was sich z.B. in einem Abfallen der mechanischen Kennwerte äußert.

Beim Einsatz für Trinkwasseranwendungen sind vor allem eine gute (glatte) Oberfläche trotz hoher Glasfasergehalte, geringe Verarbeitungs-Schwindung, einfache Verarbeitung, Dimensionsstabilität, geringe Feuchtigkeitsaufnahme und insbesondere eine geringe Migration ins Trinkwasser wichtig.

Entscheidend ist weiterhin der Trinkwassermigrationswert (Gehalt organisch gebundener Kohlenstoffe = a TOC Wert) gemäß KTW Leitlinie des Umweltbundesamtes von 1998 für eine Zulassung im Trinkwasserbereich.

Handelsübliche Polyamidprodukte sind nur teilweise für Trinkwasseranwendungen oder gar Warmwasser geeignet, die meisten erfüllen die Voraussetzungen für Heißwasseranwendungen nicht (Temperaturen 85°C im Dauergebrauch).

Der Berstdruck sollte zudem möglichst hoch sein.

Bislang erfüllen diese Kriterien nur wenige Handelsprodukte. Diese Produkte weisen den Nachteil auf, dass für die Verarbeitung hohe Werkzeugtemperaturen (Ölkühlung statt Wasserkühlung) erforderlich sind.

Aufgabe der vorliegenden Erfindung war es daher, thermoplastische Polyamidformmassen für Trinkwasseranwendungen zur Verfügung zu stellen, die die o.g. Nachteile der bekannten Produkte verringern.

Demgemäß wurde die Verwendung der eingangs definierten Formmassen gefunden. Bevorzugte Ausführungsformen sind den Unteransprüchen zu entnehmen.

Als Komponente A) enthalten die erfindungsgemäßen Formmassen 10 bis 50, vorzugsweise 10 bis 40 und insbesondere 10 bis 35 Gew.-% mindestens eines teilkristallinen Polyamides, vorzugsweise eines aliphatischen, teilkristallinen Polyamides.

Die Polyamide der erfindungsgemäßen Formmassen weisen im allgemeinen eine Viskositätszahl von 90 bis 350, vorzugsweise 110 bis 240 ml/g auf, bestimmt in einer 0,5 gew.%-igen Lösung in 96 gew.-%iger Schwefelsäure bei 25°C gemäß ISO 307.

Teilkristalline Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid^{®} X17 der BASF SE, ein 1:1 molares Verhältnis von MXDA mit Adipinsäure).

Bevorzugte Polyamide sind Polyhexamethylenadipinsäureamid, Polyhexamethylensebacinsäureamid und Polycaprolactam sowie Copolyamide 6/66.

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.

Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/61/MXD6).

Die Herstellung der bevorzugten teilaromatischen Copolyamide mit niedrigem Triamingehalt kann nach den in den EP-A 129 195 und 129 196 beschriebenen Verfahren erfolgen.

Als Komponente B) enthalten die erfindungsgemäßen Formmassen 5 bis 30, bevorzugt 10 bis 30 und insbesondere 10 bis 20 Gew.-% eines amorphen Polyamides, welches Einheiten abgeleitet von Hexamethylendiamin, Isophthalsäure und Terephthalsäure enthält.

Bevorzugt ist ein Verhältnis von Komponente A) zu B)
von 50 : 50 bis 70 : 30, insbesondere
von 55 : 45 bis 65 : 35.

Bevorzugtes Polyamid ist aus 6T/61 Einzheiten aufgebaut, mit einem 61-Anteil von mindestens 50, vorzugsweise 70 Gew.-% und höchstens 95, vorzugsweise höchstens 90 Gew.-% bezogen auf 100% B).

Verfahren zur Herstellung von B) sind dem Fachmann bekannt, so dass sich weitere Angaben hierzu erübrigen.

Als faserförmige Füllstoffe C) seien Kohlenstofffasern, Glasfasern, Carbonfasern, genannt, die in Mengen von 30 bis 65 Gew.-%, insbesondere 40 bis 65, vorzugsweise 45 bis 60 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 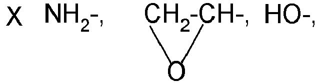
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf C)) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als sterisch gehinderte Phenole D) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 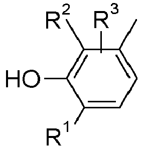 in Betracht, in der bedeuten:

R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4360617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 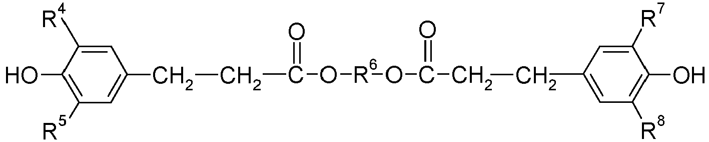 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die diesen Formeln entsprechen, sind 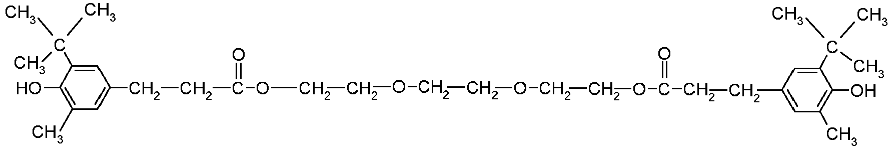 (Irganox® 245 der Firma BASF SE) 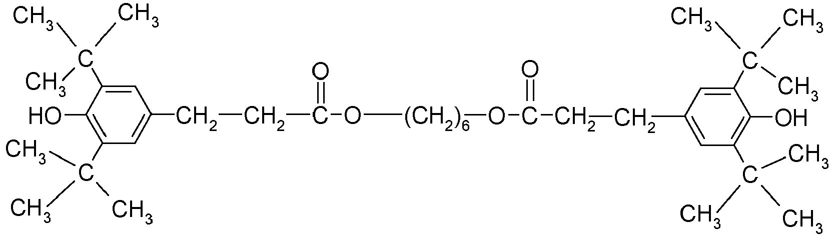 (Irganox® 259 der Firma BASF SE)

### Beispielhaft genannt seien insgesamt als sterisch gehinderte Phenole:

2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxy-phenyl)-propionat], Distearyl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydro-cinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxy-hydrocinnamid (Irganox® 1098) und das vorstehend beschriebene Irganox® 245 der Firma BASF SE, das besonders gut geeignet ist.

Die Antioxidantien D), die einzeln oder als Gemische eingesetzt werden können, sind in einer Menge von 0,05 bis zu 3 Gew.-%, vorzugsweise von 0,1 bis 1,5 Gew.-%, insbesondere 0,1 bis 1 Gew.-%, bezogen auf das Gesamtgewicht der Formmassen A) bis E) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Als Komponente E) können die Formmassen 0 bis 30, vorzugsweise bis zu 20 Gew.-% weiterer Zusatzstoffe enthalten.

Als Komponente E) enthalten die Formmassen in Mengen 0 bis 40, bevorzugt 1 bis 30, insbesondere 2 bis 20 Gew.-% kautschukelastische Polymerisate (oft auch als Schlagzähmodifier, Elastomere oder Kautschuke bezeichnet).

Ganz allgemein handelt es sich dabei um Copolymerisate die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag, Stuttgart, 1961). Seiten 392 bis 406 und in der Monographie von C.B. Bucknall, "Toughened Plastics" (Applied Science Publishers, London, 1977) beschrieben.

Im Folgenden werden einige bevorzugte Arten solcher Elastomerer vorgestellt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im Allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹ C(COO R²)=C(COO R³) R⁴ (I)

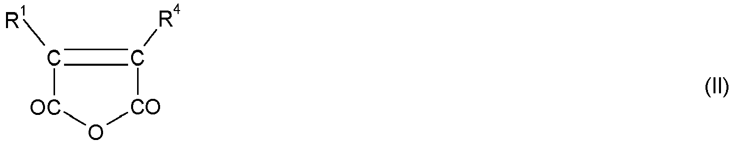

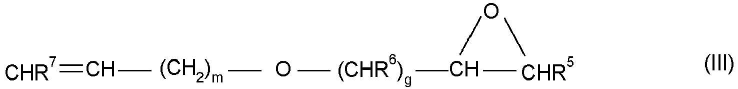

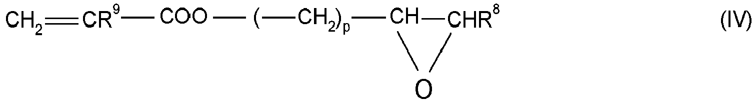

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen-enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Methacrylsäure und/oder Säureanhydridgruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen,
- 0,1 bis 40,: insbesondere 0,3 bis 20 Gew.-% Glycidylacrylat und/oder Glycidyl-methacrylat, (Meth)acrylsäure und/oder Maleinsäureanhydrid, und
- 1 bis 45,: insbesondere 5 bis 40 Gew.-% n-Butylacrylat und/oder 2-Ethylhexyl-acrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflusst.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 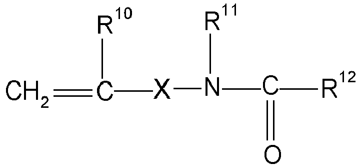 eingeführt werden können,
wobei die Substituenten folgende Bedeutung haben können:
- R¹⁰: Wasserstoff oder eine C₁- bis C₄-Alkylgruppe,
- R¹¹: Wasserstoff, eine C₁- bis C₈-Alkylgruppe oder eine Arylgruppe, insbesondere Phenyl,
- R¹²: Wasserstoff, eine C₁- bis C₁₀-Alkyl-, eine C₆- bis C₁₂-Arylgruppe oder-OR¹³
- R¹³: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder 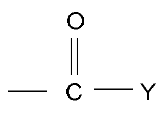
- Y: O-Z oder N H-Z und
- Z eine: C₁- bis C₁₀-Alkylen- oder C₆- bis C₁₂-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)ethylacrylat, (N,N-Dimethylamino)-methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im Allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| II | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation, hergestellt werden.

Siliconkautschuke, wie in der DE-A 37 25 576, der EP-A 235 690, der DE-A 38 00 603 und der EP-A 319 290 beschrieben, sind ebenfalls bevorzugt.

Besonders bevorzugte Kautschuke D) sind Ethylencopolymere, wie vorstehend beschrieben, welche funktionelle Monomere enthalten, wobei die funktionellen Monomeren ausgewählt sind aus der Gruppe der Carbonsäure-, Carbonsäureanhydrid-, Carbonsäureester-, Carbonsäureamid-, Carbonsäureimid-, Amino-, Hydroxyl-, Epoxid-, Urethan- oder Oxazolingruppen oder deren Mischungen.

Der Anteil der funktionellen Gruppen beträgt 0,1 bis 20, vorzugsweise 0,2 bis 10 und insbesondere 0,3 bis 3,5 Gew.-%, bezogen auf 100 Gew.-% D).

Besonders bevorzugte Monomere sind aus einer ethylenisch ungesättigten Mono- oder Dicarbonsäure oder einem funktionellen Derivat einer solchen Säure aufgebaut.

Grundsätzlich eignen sich alle primären, sekundären und tertiären C₁-C₁₈-Alkylester der Acrylsäure oder Methacrylsäure, doch werden Ester mit 1 - 12 C-Atomen, insbesondere mit 2 - 10 C-Atomen bevorzugt.

Beispiele hierfür sind Methyl-, Ethyl-, Propyl-, n-, i-Butyl- und t-Butyl-, 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Anstelle der Ester oder zusätzlich zu diesen können in den Olefinpolymerisaten auch säurefunktionelle und/oder latent säurefunktionelle Monomere ethylenisch ungesättigter Mono- oder Dicarbonsäuren oder Epoxygruppen aufweisende Monomere enthalten sein.

Als weitere Beispiele für Monomere seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre C₁-C₁₂-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppenenthaltenden Monomeren werden vorzugsweise durch Zugabe von Verbindungen der allgemeinen Formeln I - IV zum Monomerengemisch in die Olefinpolymerisate eingebaut.

Der Schmelzindex der Ethylencopolymeren liegt im allgemeinen im Bereich von 1 bis 80 g/10 min (gemessen bei 190°C und 2,16 kg Belastung).

Das Molekulargewicht dieser Ethylen-α-Olefin-Copolymere liegt zwischen 10.000 und 500.000 g/mol, bevorzugt zwischen 15.000 und 400.000 g/mol (Mn, bestimmt mittels GPC in 1,2,4-Trichlorbenzol mit PS-Eichung).

In einer besonderen Ausführungsform werden mittels sog. "single site catalysts" hergestellte Ethylen-α-Olefin-Copolymere eingesetzt. Weitere Einzelheiten können der US 5,272,236 entnommen werden. In diesem Fall weisen die Ethylen-α-Olefin-Copolymere eine für Polyolefine enge Molekulargewichtsverteilung kleiner 4, vorzugsweise kleiner 3,5 auf.

Bevorzugt eingesetzte Handelsprodukte B sind Exxelor^{®} VA 1801 oder 1803, Kraton^{®} G 1901 FX oder Fusabond^{®} N NM493 D oder Fusabond^{®} A560 der Firmen Exxon, Kraton und DuPont sowie Tafmer^{®}MH 7010 der Firma Mitsui.

Selbstverständlich können auch Mischungen der vorstehend aufgeführten Kautschuktypen eingesetzt werden.

Als Komponente E) können die erfindungsgemäßen Formmassen bis zu 20, vorzugsweise bis zu 10 Gew.-% weiterer teilchenförmige Zusatzstoffe enthalten.

Als teilchenförmige Füllstoffe E) seien Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt.

Die Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 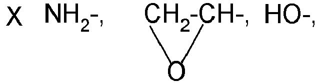
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf E)) zur Oberflächenbeschichtung eingesetzt.

Als weitere Füllstoffe seien Kaolin, calciniertes Kaolin, Wollastonit, Talkum und Kreide genannt sowie zusätzlich plättchenförmige Nanofüllstoffe bevorzugt in Mengen zwischen 0,1 und 10 %. Bevorzugt werden hierfür Böhmit, Bentonit, Montmorillonit, Vermicullit, Hektorit und Laponit eingesetzt. Um eine gute Verträglichkeit der plättchenförmigen Nanofüllstoffe mit dem organischen Bindemittel zu erhalten, werden die plättchenförmigen Nanofüllstoffe nach dem Stand der Technik organisch modifiziert. Der Zusatz der plättchen- oder nadelförmigen Nanofüllstoffe führt meist zu einer weiteren Steigerung der mechanischen Festigkeit.

Als Komponente E) können die erfindungsgemäßen Formmassen 0,05 bis 3, vorzugsweise 0,1 bis 1,5 und insbesondere 0,1 bis 1 Gew.-% eines Schmiermittels enthalten.

Bevorzugt sind Al-, Alkali-, Erdalkalisalze oder Ester- oder Amide von Fettsäuren mit 10 bis 44 C-Atomen, vorzugsweise mit 12 bis 44 C-Atomen.

Die Metallionen sind vorzugsweise Erdalkali und Al, wobei Ca oder Mg besonders bevorzugt sind.

Bevorzugte Metallsalze sind Ca-Stearat und Ca-Montanat sowie Al-Stearat.

Es können auch Mischungen verschiedener Salze eingesetzt werden, wobei das Mischungsverhältnis beliebig ist.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Penta-erythrittetrastearat.

Es können auch Mischungen verschiedener Ester oder Amide oder Ester mit Amiden in Kombination eingesetzt werden, wobei das Mischungsverhältnis beliebig ist.

Als Komponente E) können die erfindungsgemäßen thermoplastischen Formmassen übliche Verarbeitungshilfsmittel wie Stabilisatoren, Mittel gegen Wärmezersetzung und Zersetzung durch ultraviolettes Licht, Gleit- und Entformungsmittel, Färbemittel wie Farbstoffe und Pigmente, Keimbildungsmittel, Weichmacher usw. enthalten.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Es können anorganische Pigmente, wie Titandioxid, Ultramarinblau, Eisenoxid und Ruß, weiterhin organische Pigmente, wie Phthalocyanine, Chinacridone, Perylene sowie Farbstoffe, wie Anthrachinone als Farbmittel zugesetzt werden.

Als Keimbildungsmittel können Natriumphenylphosphinat, Aluminiumoxid, Siliziumdioxid sowie bevorzugt Talkum eingesetzt werden.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabender-Mühlen oder Banbury-Mühlen mischt und anschließend extrudiert. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden. Die Mischtemperaturen liegen in der Regel bei 230 bis 320°C.

Nach einer weiteren bevorzugten Arbeitsweise können die Komponenten B) und C) sowie gegebenenfalls D) und E) mit einem Präpolymeren gemischt, konfektioniert und granuliert werden. Das erhaltene Granulat wird in fester Phase anschließend unter Inertgas kontinuierlich oder diskontinuierlich bei einer Temperatur unterhalb des Schmelzpunktes der Komponente A) bis zur gewünschten Viskosität kondensiert.

Die erfindungsgemäßen thermoplastischen Formmassen zeichnen sich durch eine gute Oberfläche, Dimensionsstabilität und Verarbeitungsstabilität sowie Trinkwassereignung aus. Diese eignen sich daher zur Herstellung von Formkörpern jeglicher Art, für Trinkwasseranwendungen, insbesondere Heißwasseranwendungen. Nachfolgend sind einige Beispiele genannt:
Wasserzähler, Wasserzählergehäuse:
   Sanitärbauteile: z.B. Bauteile einer Toilettenspülung
   Rohrverbinder, Fittinge für die Trinkwasseranwendung
   Ventile,
   Armaturen.

### Beispiele

Es wurden folgende Komponenten verwendet:
Komponente A:
   Polyamid 66 mit einer Viskositätszahl VZ von 150 ml/g, gemessen als 0.5 gew.-%ige Lösung in 96 gew.-%iger Schwefelsäure bei 25°C nach ISO 307 (Es wurde Uitramid® A27 der BASF SE verwendet).
Komponente B:
   PA 6T/61 (30:70 Gew.-%) mit einer VZ von 110 ml/g nach ISO 307.
Komponente C:
   Standard Schnittglasfaser für Polyamide, Länge = 4,5 mm, Durchmesser = 10µm.
Komponente D:
   N,N'-Hexamethylen-bis-3-di-ter.-butyl-4-hydroxyhydrocinnamid (Irganox® 1098).
Komponente E/1:
   Ethylenbisstearylamid
Komponente E/2:
   Rußbatch (25 %ig in Polyethylen)

Zum Nachweis der erfindungsmäß beschriebenen Verbesserungen der Trinkwassereignung wurden durch Compoundierung entsprechende Kunststoff-Formmassen angefertigt. Die einzelnen Komponenten wurden hierzu in einem Zweiwellenextruder ZSK 26 (Fa. Berstorff) bei einem Durchsatz von 20 kg/h und ca. 270°C bei flachem Temperaturprofil gemischt, als Strang ausgetragen, bis zur Granulierfähigkeit abgekühlt und granuliert.

Erfindungsgemäße Zusammensetzung I:
A) 29,25 Gew.-%
B) 19 Gew.-%
C) 50 Gew.-%
D) 0,25 Gew.-%
E/1) 0,7 Gew.-%
E/2) 0,8 Gew.-%

Vergleichsprodukte:
II. Ultramid® A3 EG10 : PA66 (VZ = 145 ml/g) mit 50 Gew.-% C) und 0,129 Gew.-% D) sowie geringe Mengen (0,322 Gew.-%) eines Schmiermittels, 0,8 % E/2
III. Ultramid® TKR 4355G10 : PA6/6T (30:70), mit 50 Gew.-% C) und 0,3 Gew.-% E/1 sowie Stabilisatoren.
IV. Grivory® GV-5 FWA: PA66/6T/61 (80/14/6 Gew.-%) mit 50 Gew.-% Glasfasern.
V. Grivory® HTV-5X1 : PA6T/6I (70/30 Gew.-% mit 50 Gew.-% Glasfasern.

Die Verarbeitungsschwindung wurde gemäß EN ISO 294-4 ermittelt.

**Tabelle I:**

| Zusammensetzung | longitudinal [ % ] | transversal [ % ] |
|---|---|---|
| I. | 24 | 65 |
| II. | 32 | 83 |
| III. | - | - |
| IV. | 28 | 80 |
| V. | 37 | 85 |

Der Trinkwassermigrationswert wurde gemäß Leitlinie zur hygienischen Beurteilung von organischen Materialien in Kontakt mit Trinkwasser (KTW-Leitlinie) des Umweltbundesamtes, 1998, bestimmt.

**Tabelle II:**

| Zusammensetzung | | II | I | IV |
|---|---|---|---|---|
| TOC (2* 24h, 60°C) | [mg/(dm² * d)] | 1,454 | 0,435 | 0,711 |
| TOC (7* 24h, 60°C) | [mg/(dm² * d)] | 0,570 | 0,245 | 0,415 |
| TOC (2* 24h, 85°C) | [mg/(dm² * d)] | 3,825 | 1,485 | 2,111 |
| TOC (7* 24h, 85°C) | [mg/(dm² * d)] | 1,227 | 0,702 | 0,970 |

Der Berstdruck wurde wie folgt bestimmt:
Berstdruckprüfung an Abdichtdruckplatte WZ:
Prüfteile trocken / konditioniert (12d 80°C/85% rel.F.)
Prüftemperatur: 23 °C
Prüfmedium: Wasser-Glykol 50 : 50
Prüfgeschwindigkeit: 1 bar/sec.

### Versuchsaufbau:

Der Hydraulikzylinder bewegte sich nach vorne und übte durch seine Bewegung Druck aus auf Wasser-Glykolgemisch, was einen Druckanstieg zur Folge hatte. Die Druckanstiegsgeschwindigkeit war 1 bar/sec. bis zur Zerstörung der Druckplatte (Bersten). Der max. Druck =̂ Berstdruck.

**Tabelle 3:**

| Zusammensetzung | Berstdruck (trocken) | Berstdruck (konditioniert) |
|---|---|---|
| | [bar] | [bar} |
| II. | 56,7 | 68,6 |
| I. | 81,3 | 73,0 |
| IV. | 58,8 | 68,5 |
| V. | 59,6 | 67,7 |

## Patentansprüche

1. Verwendung von thermoplastischen Formmassen enthaltend
A) 10 bis 50 Gew.-% eines teilkristallinen Polyamides,
B) 5 bis 30Gew.-% eines amorphen Polyamides, enthaltend Einheiten abgeleitet von Hexamethylendiamin, Isophthalsäure und Terephthalsäure,
C) 30 bis 65 Gew.% eines faserförmigen Füllstoffes,
D) 0 bis 3 Gew.-% eines sterisch gehinderten Phenols,
E) 0 bis 30 Gew.-% weiterer Zusatzstoffe,
wobei die Summe der Gewichtsprozente A) bis E) 100% ergibt,
zur Herstellung von Formkörpern für Trinkwasseranwendungen.

2. Verwendung nach Anspruch 1 von thermoplastischen Formmassen, enthaltend
A) 10 bis 50 Gew.-%
B) 5 bis 30 Gew.-%
C) 40 bis 65 Gew.-%
D) 0,05 bis 3 Gew.-%
E) 0 bis 30 Gew.-%,
wobei die Summe der Gewichtsprozente A) bis E) 100% ergibt..

3. Verwendung nach den Ansprüchen 1 oder 2, wobei das Verhältnis der Komponenten A) zu B) von 50 : 50 bis 70 : 30 beträgt.

4. Verwendung nach den Ansprüchen 1 bis 3, wobei die Komponente A) ein teilkristallines aliphatisches Polyamid ist.

5. Verwendung nach den Ansprüchen 1 bis 4, wobei die Komponente B) ein Polyamid 6T / 61 mit einem 61-Anteil von mindestens 52 Gew.-% und höchstens 90 Gew.-%, bezogen auf 100 % B).

6. Verwendung nach den Ansprüchen 1 bis 5, wobei die Formkörper für Heißwasseranwendungen eingesetzt werden.

7. Formkörper für Trinkwasseranwendungen, erhältlich aus den erfindungsgemäß verwendbaren Formmassen gemäß den Ansprüchen 1 bis 6.

8. Formkörper nach Anspruch 7, **dadurch gekennzeichnet, dass** diese Wasserzähler, Wasserzählergehäuse, Sanitärbauteile, Bauteile einer Toilettenspülung, Rohrverbinder, Fittinge für die Trinkwasseranwendung, Ventile, Armaturen sind.
